# EUROPEAN PATENT SPECIFICATION

(11) **EP 4 332 144 B1**
(45) Date of publication and mention of the grant of the patent: **04.06.2025**
(21) Application number: 22193895.4
(22) Date of filing: 05.09.2022
(51) Int. Cl.: C08G 59/66, C09J 163/00

(54) **ONE COMPONENT (1K) CURABLE ADHESIVE COMPOSITION**
EINKOMPONENTIGE (1K) HÄRTBARE KLEBSTOFFZUSAMMENSETZUNG
COMPOSITION ADHÉSIVE DURCISSABLE MONOCOMPOSANT (1K)

(43) Date of publication of application: 06.03.2024
(73) Proprietor: Henkel AG & Co. KGaA, 40589 Düsseldorf (DE)
(72) Inventor: Stapf, Stefanie, 45239 Essen (DE); Sundermeier, Uta, 42799 Leichlingen (DE); Provot, Fanny, 69100 Villeurbanne (FR)

(56) References cited:
- EP-A1- 3 835 383
- WO-A1-2021/115774
- US-A1- 2018 340 097

## Description

### FIELD OF THE INVENTION

The present invention is directed to an one-component (1K) curable adhesive composition which, after curing, may bond substrates together and bear loads within a bonded composite structure, but which can also be electrochemically debonded from particular substrates to which it is applied. More particularly, the present invention is directed an one-component (1K) curable and electrochemically disbondable adhesive composition which at least partially recovers its ability to bond substrates and to bear loads within a bonded composite structure after the electrochemical disbonding operation.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, certain disadvantages must also be acknowledged. Firstly, it tends to be difficult to disassemble adhesively bonded objects where this is required in practical applications. Secondly, when an adhesive has been cured *in situ* to bond two substrates together, a cross-linked chemical network is formed: after disassembly of the adhesively bonded objects, that chemical network cannot in most circumstances be re-used as an adhesive. These disadvantages have obviously been thrown into focus in those - often resource intensive - industries where it would be beneficial to recycle, re-use or re-purpose manufactured goods.

As regards the first identified disadvantage, the removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong), US Patent No. 4,729,797 (Linde et al.) and US 20140287299 A1 (Krogdahl) - might be effective but can be time consuming and complex to perform, particularly if one wishes to preserve a substrate surface having residual adhesive disposed thereon: the aggressive chemicals and / or harsh conditions required will often remove substantially all the adhesive and cause damage to the substrates being separated, rendering them unsuitable for subsequent applications.

As an exemplary case, it is evidently desirable to remove, replace and / or recycle the components of electronic devices - such as laptops and phones - which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes, the application of chemicals or high temperature.

Noting these problems, certain authors have sought to develop disbondable adhesive compositions, wherein the passage of an electrical current through the cured compositions acts to disrupt the bonding at the interface of the adhesive and the substrate.

US Patent No. 7,465,492 (Gilbert) describes an disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US 2008/0196828 (Gilbert) describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to disbond from the surface.

WO2017/133864 (Henkel AG & Co. KGaA) describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically disbondable hot melt adhesive composition to the conductive ink-coated surface of the first substrate and/or the second substrate; c) contacting the first and the second substrates such that the electrically disbondable hot melt adhesive composition is interposed between the two substrates; d) allowing formation of an adhesive bond between the two substrates to provide bonded substrates; and, e) applying a voltage to the bonded substrates whereby adhesion at least one interface between the electrically disbondable hot melt adhesive composition and a substrate surface is substantially weakened.

WO2021/115771 A1 (Henkel AG & Co. KGaA) is directed to a curable and one component (1K) debondable adhesive composition comprising: a) epoxy resin; b) a curing agent for said epoxy resin; c) an electrolyte; and d) an electrically non-conductive filler; wherein said composition comprises at least one of: e) a combination of a solubilizer and a toughener; and, f) electrically conductive particles.

Despite the advantageous development of electrochemically disbondable adhesive compositions, none of the above-mentioned citations provide for the re-use of debonded adhesive for the formation of composite structures. There is thereby considered to exist a need in the art to provide an adhesive composition: which can be conveniently applied to the surfaces of substrates to be bonded; which upon curing thereof can provide an effective bond within composite structures containing said substrates; which can be effectively de-bonded from those substrates by the facile application of an electrical potential across the cured adhesive; but which can also permit the re-use of the cured adhesive in the effective bonding of substrates. Such disbondable adhesives would have advantageous utility in *inter alia* electronic devices.

### STATEMENT OF THE INVENTION

In accordance with a first aspect of the invention there is provided a curable and electrochemically disbondable one component (1K) adhesive composition comprising:
a) at least one epoxide compound;
b) a curing agent consisting of one or more compounds which have at least one epoxide reactive group and which do not possess a disulfide functional group;
c) a healing agent consisting of one or more compounds which contain at least one disulfide functional group and optionally at least one epoxide reactive group selected from: hydroxyl; thiol; amine; or, carboxyl; and,
d) an electrolyte,
wherein the composition is characterized by a molar ratio of epoxide-reactive groups to epoxide groups of from 0.6:1 to 1.2: 1.

In important embodiments of the invention, the composition comprises, based on the weight of the composition:
from 15 to 50 wt.%, preferably from 20 to 50 wt.%, more preferably from 20 to 40 wt.% of a) at least one polyepoxide compound;
from 0.01 to 25 wt.%, preferably from 5 to 25 wt.%, more preferably from 5 to 20 wt.% of b) a curing agent consisting of one or more compounds which have at least two epoxide reactive groups and which do not possess a disulfide functional group;
from 0.01 to 10 wt.%, preferably from 1 to 10 wt.%, more preferably from 2 to 8 wt.% of c) said healing agent;
from 0.5 to 15 wt.%, preferably from 0.5 to 10 wt.%, more preferably from 0.5 to 5 wt.% of d) said electrolyte; and,
from 0 to 55 wt.%, preferably from 1 to 55 wt.%, more preferably from 15 to 55 wt.% of e) rheology control agent,
wherein the composition is characterized by a molar ratio of epoxide-reactive groups to epoxide groups of from 0.6: 1 to 1.1: 1, preferably of from 0.75:1 to 1:1 and more preferably of from 0.75:1 to 0.95:1. It is preferred that the polyepoxide compound of the composition is selected from the group consisting of bisphenol A epoxy resin, bisphenol F epoxy resin and mixtures thereof.

Compositions in accordance with these definitions have been demonstrated to provide excellent bond stability, even under high temperature and high humidity conditions: examples below document stability at *inter alia* 95% relative humidity (RH) and 65°C. Moreover, when composite structures have been formed using the cured adhesive compositions, these structures have been facile to disbond by the application of a potential difference across the adhesive bond.

The presence of the healing agent permits the cured composition of the present disclosure to be re-used in forming bonded structures after the initial composite structures have been subjected to an electrochemical disbonding operation. Under thermal activation, it is considered that a disulfide re-arrangement occurs within the cured matrix: the resultant change in matrix topology of the previously cured and disbonded adhesive allows that adhesive to bond substrates together. Examples below demonstrate significant recovery of bond strength after thermal activation with respect to the bond strength of the initially cured adhesive composition.

It is preferred that b) said curing agent of the composition comprises or consists of a thiol-functional compound selected from the group consisting of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate, glycol dimercaptoacetate and mixtures thereof.

In an embodiment, said healing agent comprises a compound selected from the group consisting of: bis(4-aminophenyl)disulfide; bis(2-aminophenyl) disulfide; 2-amino-4-chlorophenyl disufide; and, mixtures thereof. In an alternative embodiment, said healing agent comprises a compound selected from the group consisting of: 3,3'-dithiopropionic acid; 4,4'-dithiobutyric acid; bis-(10-carboxydecyl)disulfide; 2,2'-dithiobisethanamine (*cystamine*); (2*R*)-2-amino-3-[[(2*R*)-2-amino-2-carboxyethyl]disulfanyl]propanoic acid (*L-cystine*); and, mixtures thereof. In a further alternative embodiment, said healing agent comprises a liquid mercaptan-terminated polysulfide polymer.

Independently of or additional to this statement of preference for the curing agent and healing agent, it is preferred that said electrolyte is selected from the group consisting of: 1-ethyl-3-methyl-1H-imidazol-3-um methansulfonate; 1-ethyl-3-methyl-1H-imidazol-3-um methyl sulfate; 1-methylimidazolium bis(trifluoromethylsulfonyl)imide; 3-methylimidazolium bis(trifluoromethylsulfonyl) imide; 1-ethyl-3-methylimidazolium bis(trifluoromethylsulfonyl)imide; 1-propyl-3-methylimidazolium bis(trifluoromethylsulfonyl)imide; 1-butyl-3-methylimidazolium bis(trifluoromethylsulfonyl)imide; 1-butyl-2,3-dimethylimidazolium bis(trifluoromethylsulfonyl) imide; 1-hexyl-3-methylimidazolium bis(trifluoromethylsulfonyl)imide; 1-octyl-3-methylimidazolium bis(trifluoromethylsulfonyl)imide; 1-methyl-3-octylimidazolium bis(trifluoromethylsulfonyl)imide; 1-decyl-3-methylimidazolium bis(trifluoromethylsulfonyl)imide; 1-dodecyl-3-methylimidazolium bis(trifluoromethylsulfonyl)imide; tetraethylphosphonium bis(trifluoromethylsulfonyl)imide; tetrabutylphosphonium bis(trifluoromethylsulfonyl)imide; tetraoctylphosphonium bis(trifluoromethylsulfonyl)imide; trihexyl(tetradecyl)phosphonium bis(trifluoromethylsulfonyl)imide; tridecyl(tetradecyl)phosphonium bis(trifluoromethylsulfonyl)imide; tributyl(methyl)phosphonium diethylphosphate; tributyl(ethyl)phosphonium diethylphosphate; tetraoctylphosphonium diethylphosphate; and, mixtures thereof. A particular preference may be noted for said electrolyte being selected from the group consisting of: 1-ethyl-3-methyl-1H-imidazol-3-um methansulfonate; 1-ethyl-3-methyl-1H-imidazol-3-um methyl sulfate; trihexyl(tetradecyl)phosphonium bis(trifluoromethylsulfonyl)imide; tributyl(methyl)phosphonium diethylphosphate; tributyl(ethyl)phosphonium diethylphosphate; and, mixtures thereof.

In accordance with a second aspect of the present invention, there is provided a bonded structure comprising:
a first substrate having an electrically conductive surface; and,
a second substrate having an electrically conductive surface;
wherein the cured adhesive composition as defined herein above and in the appended claims is disposed between the first and second substrates.

The present disclosure also provides for the use of a cured composition as defined herein above and in the appended claims as an adhesive. The use of the previously cured composition in this manner is preceded by the thermal treatment of the cured composition to activate disulfide bond re-arrangement therein.

In accordance with a further aspect of the present invention, there is provided a method of forming and re-forming bonded structures, the method comprising the steps of:
providing a first bonded structure comprising:
   a first substrate having an electrically conductive surface;
   a second substrate having an electrically conductive surface; and,
   a cured adhesive composition as defined herein above and in the appended claims disposed between the first and second substrates;
applying a voltage across both electrically conductive surfaces to form an anodic interface and a cathodic interface;
disbonding the first and second substrates;
contacting said disbonded first substrate with a third substrate such that the cured adhesive composition is interposed between the first and third substrates; and,
thermally treating the residual cured adhesive composition to bond together said first and third substrates.

### DEFINITIONS

As used herein, the singular forms *"a", "an"* and *"the"* include plural referents unless the context clearly dictates otherwise.

The terms *"comprising", "comprises"* and *"comprised of"* as used herein are synonymous with *"including", "includes", "containing"* or *"contains",* and are inclusive or open-ended and do not exclude additional, non-recited members, elements, or method steps.

As used herein, the term *"consisting of'* excludes any element, ingredient, member, or method step not specified.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "from 0 to x" specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein the term *"disbondable"* means that, after curing of the adhesive, the bond strength can be weakened by at least 50% upon application of an electrical potential of from 0.5V - 100V for a duration of from 1 second to 60 minutes. The cured adhesive is applied between two substrates which are bonded by said adhesive so that an electric current is running through the adhesive bond line. Bond strength is measured by Tensile Lap Shear (TLS) test performed at room temperature and based upon EN 1465:2009 (German version) Based on Adhesives - Determination of tensile lap-shear strength of bonded assemblies.

As used herein, the term *"monomer"* refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

As used herein, the term *"equivalent (eq.)"* relates, as is usual in chemical notation, to the relative number of reactive groups present in the reaction.

The term *"electrolyte"* is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present invention and the cured adhesives obtained therefrom possess *"electrolyte functionality"* in that the adhesive material permits the conduction of ions, either anions, cations, or both. The electrolyte functionality is understood to derive from the ability of the compositions and cured adhesives to solvate ions of at least one polarity.

As used herein, *"(meth)acryf'* is a shorthand term referring to *"acryl"* and/or *"methacryl".* Thus, the term *"(meth)acrylamide"* refers collectively to acrylamide and methacrylamide.

As used herein, "*C₁-Cₙ alkyl*" group refers to a monovalent group that contains 1 to n carbons atoms, that is a radical of an alkane and includes straight-chain and branched organic groups. As such, a "*C₁-C₁₈ alkyl"* group refers to a monovalent group that contains from 1 to 18 carbons atoms, that is a radical of an alkane and includes straight-chain and branched organic groups. In general, a preference for alkyl groups containing from 1-12 carbon atoms (C₁-C₁₂ alkyl) - for example alkyl groups containing from 1 to 8 carbon atoms (C₁-C₈ alkyl) - should be noted. Examples of alkyl groups include but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₁₈ hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: nonlimiting examples thereof are a methoxy group, an ethoxy group and an iso-propyloxy group. The term "*C₁-C₁₈ alkoxyalkyl"* as used herein refers to an alkyl group having an alkoxy substituent as defined above and wherein the moiety (alkyl-O-alkyl) comprises in total from 1 to 18 carbon atoms:
such groups include methoxymethyl (-CH₂OCH₃), 2-methoxyethyl (-CH₂CH₂OCH₃) and 2-ethoxyethyl. Analogously, the term "C₇-C₁₈ alkoxyaryl" as used herein refers to an aryl group having an alkoxy substituent as defined above and wherein the moiety (aryl-O-alkyl) has in total from 7 to 18 carbon atoms.

The term "*C₂-C₄ alkylene"* as used herein, is defined as saturated, divalent hydrocarbon radical having from 2 to 4 carbon atoms.

The term "*C₃ -C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C1-C4)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, *"C₂-C₂₀ alkenyl"* refers to hydrocarbyl groups having from 2 to 20 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "*E*" and "*Z*" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; -CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; - CH₂CH=CHCH₂CH₃; -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"alkylaryl"* refers to alkyl-substituted aryl groups, both groups being defined as above. Further, as used herein "aralkyl" means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The term *"equivalent weight"* as used herein refers to the molecular weight divided by the number of a function concerned. As such, "epoxy equivalent weight" (EEW) means the weight of resin, in grams, that contains one equivalent of epoxy.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine, and phenyl.

As used herein, the term *"disulfide group"* refers to a functional group with the structure R-S-S-R'. Where a compound is referred to a being a disulfide, the compound must possess an -S-S- linkage.

The molecular weights referred to in this specification can be measured with gel permeation chromatography (GPC) using polystyrene calibration standards, such as is done according to ASTM 3536.

As used herein, the term softening point (°C.) used in regard to waxes herein is the Ring & Ball softening point, which is measured unless otherwise indicated according to ASTM E28.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done using standard liquids of known viscosity from 1 to 50,000 cps (parallel plate PP20 and at shear rate 1 s⁻¹ at 23°C). Measurements of the compositions according to the present invention are done using the parallel plate PP20 at different shear rates from 1.5 to 100 s⁻¹.

### DETAILED DESCRIPTION OF THE INVENTION

### a) Epoxide Compounds

The composition of the present disclosure necessarily comprises at least one epoxide compound. Typically, the composition comprises from 15 to 50 wt.%, based on the weight of said composition, of a) said at least one epoxide: it is preferred that the total amount of epoxide compound(s) is from 20 to 50 wt.%, for example from 20 to 40 wt.% of said composition.

Epoxide compounds as used herein may include mono-functional epoxide compounds, multi- or polyfunctional epoxide compounds, and combinations thereof. Part a) of the composition may be constituted by a single epoxide compound but equally may be mixtures of epoxide functional compounds, including mixtures of compounds having different numbers of epoxide groups per molecule. An epoxide compound may be saturated or unsaturated, aliphatic, cycloaliphatic, aromatic, or heterocyclic and may be substituted. Further, the epoxide compound may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (E) herein below: 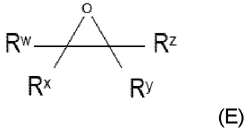 wherein:
R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a cost's standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The above aside, the composition can in certain embodiments comprise glycidoxy alkyl alkoxy silanes having the formula: 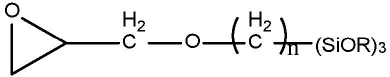 wherein:
each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and 8-glycidooxyoctyl trimethoxysilane. When present, the epoxide functional silanes should constitute less than less than 20 wt.%, preferably less than 10 wt.% or less than 5 wt.%, based on the total weight of the epoxide compounds.

The present invention also does not preclude the curable compositions from further comprising one or more cyclic monomers selected from the group consisting of: oxetanes; cyclic carbonates; cyclic anhydrides; and lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and EP-A-0 119 840. However, such cyclic co-monomers should constitute less than 20 wt.%, preferably less than 10 wt.% or less than 5 wt.%, based on the total weight of the epoxide compounds.

### Curing Agent

The present invention provides for the presence in the composition of a curing agent consisting of one or more compounds which have at least one epoxide reactive group and which do not possess a disulfide functional group.

There is no particular intention to limit the curing agent which may have utility in the present invention. For instance, the curing agent may comprise or consist of one or more compounds which possess at least two epoxide reactive groups per molecule. Equally, the curing agent may comprise or consist of latent curatives, including photo-latent curatives. Combinations of reactive and latent curatives are envisaged within the context of the present invention. That aside, the amount of curing agent present in the composition should broadly be sufficient to effect the complete cure of the epoxide compound(s).

More particularly, the amount of curing agent present in the composition should be such that composition is characterized by a molar ratio of epoxide-reactive groups to epoxide groups from 0.6:1 to 1.2: 1, for example from 0.6: 1 to 1.1: 1, from 0.7:1 to 1:1 or from 0.75: 1 to 1:1. Notably, the molar ratio of epoxide-reactive groups to epoxide groups of 1:1 is included within these stated ranges. A highly preferred molar ratio of epoxide-reactive groups to epoxide groups provides for an excess of epoxide reactive groups and is from 0.75:1 to 0.95:1. For surety: the term epoxide reactive groups include latent reactive groups which are therefore include in the molar ratio term; and, as will be described herein below, the healing agent can contribute to the total of epoxide reactive groups present in the composition.

In an supplementary expression of the composition's constituency, it is preferred that the composition comprises from 0.01 to 25 wt.% of said curing agent for said epoxide compound(s), based on the weight of the composition. Preferably said composition comprises from 5 to 25 wt.%, for example from 5 to 20 wt.% of said curing agent.

Reactive curing agents may, in particular, include one or more of: i) at least one polyamine having at least two amine hydrogens reactive toward epoxide groups; ii) at least one mercapto compound having at least two mercapto groups reactive toward epoxide groups; and iii) at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine^{®} (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine^{®} D-230 and D-600 (available from Huntsman).

As noted above, the composition of the present invention may optionally comprise - as the curing agent - at least one compound which has at least two reactive mercapto-groups per molecule, again subject to the proviso that the curing agent does not possess a disufide functional group. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As noted above, a reactive curative may comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present invention without special limitations. For example, suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. Further, examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and Sunmide LH-210, Ancamin 2014AS/FG and Ancamin 2337S commercially available from Air Products and Chemicals, Inc.

As is known in the art, dicyandiamide finds common utility as a latent epoxy curing agent and may indeed be used in the present compositions. When employed, it is preferred that said dicyandiamide is in finely divided form: an average particle size (d50) of from 0.5 to 100 µm, for example from 1 to 50 µm or from 2 to 20 µm might be noted as desirable. Said particle size refers to the diameter or largest dimension of a particle in a distribution of particles and is measureable via dynamic light scattering.

Further exemplary latent epoxy curing agents include but are not limited: ketimines obtainable by the reaction of aliphatic polyamines and ketones; polyethyleneimines, in particular polyethyleneimines having a weight average molecular weight (Mw) from 700 to 1,000,000 g/mol.; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicylohydrazide.

### Healing Agent

The composition of the present invention is characterized in that it comprises a healing agent. Said healing agent consists of at least one compound which contains at least one disulfide functional group and optionally at least one epoxide reactive group selected from: hydroxyl; thiol; amine; or, carboxyl.

Where the optional epoxide reactive group is absent, the healing agent will be unreactive until the reaction conditions are such that a disulfide exchange reaction occurs: this embodiment presents the possibility that the healing agent might not take part in the curing by which initial bonding with the one component (1K) composition is achieved but can become activated within the cured matrix to allow that matrix to re-bond the substrates of a given assembly.

In the preferred alternative that the healing agent comprises an epoxide reactive group, the healing agent will take part in the curing by which initial bonding is achieved. Broadly, that curing reaction will yield a vitrimer of which the polymeric network topology obtained after the initial cure can be changed by thermally activating the disulfide re-arrangement.

Without being bound by theory, the initial curing involves two competing reactions: i) the opening of the epoxide rings by the epoxide reactive groups of the curing agent and, where applicable, of the healing agent to form an oligomer; and ii) the crosslinking reaction of the oligomers through the pendant reactive groups created by the opening of the epoxide groups. When the healing agent contains epoxide reactive groups, these may take part in the curing reaction and the healing agent may also increase the curing rate under certain circumstances: if the curing conditions are such that the reversible cleavage and reformation of the disulfide bonds occurs - typically under elevated temperatures - this increases the collision probability of epoxide groups and the epoxide reactive groups in the reaction mixture. It is considered, however, that fast reaction rates might impact the network topology - for instance the stability of crystalline domains - in the cured resin in that a rapid increase in the viscosity of the reaction mixture reduces the mobility of the oligomers formed: these oligomers have less time to order before the crosslinking reaction occurs.

This consideration may be a determinant of the molar amount of disulfide bonds introduced via a healing agent which contains epoxide reactive groups: the amount of healing agent should effectively promote the matrix re-arrangement under the thermal activation of the disulfide groups but should not be so excessive as to be deleterious to the stability of the cured composition.

When formulating the curable composition, it is preferred that the composition comprises from 0.01 to 10 wt.% of said healing agent, based on the weight of the composition. Preferably said composition comprises from 1 to 10 wt.%, for example from 2 to 8 wt.% of said healing agent.

In an important embodiment, the healing agent comprises or consists of a compound having the general formula (DS1): 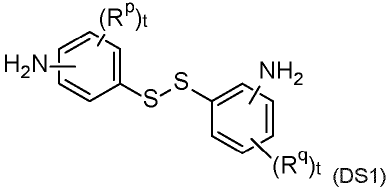 wherein:
R^{p} and R^{q} are independently selected from the group consisting of: H; halogen; C₁-C₁₂ alkyl; C₆-C₁₈ aryl, C₁-C₁₂ alkoxy; -(CO)Rᵣ, -O(CO)R^{r}, -(SO)R^{r}, -NH-CO-R^{r}, - COOR^{r}, -NR^{r}R^{s}, and halogen;
R^{r} and R^{s} are independently selected from the group consisting of: -H, C₁-C₁₂ alkyl and C₆-C₁₈ aryl; and,
t is an integer of from 0 to 4.

As regards general formula (DS1), it is preferable that: R^{p} and R^{q} are independently selected from the group consisting of: H, halogen, C₁-C₁₂ alkyl and C₆-C₁₈ aryl; and t is an integer of from 0 to 2. In particular exemplars: R^{p} and R^{q} are independently selected from the group consisting of: H, halogen and C₁-C₄ alkyl; and t is an integer of from 0 to 2. And exemplary compounds in accordance with Formula (DS1) include but are not limited to: bis(4-aminophenyl)disulfide; bis(2-aminophenyl) disulfide; and, 2-amino-4-chlorophenyl disufide.

In an alternative embodiment, the healing agent comprises or consists of a compound having the general formula (DS2): 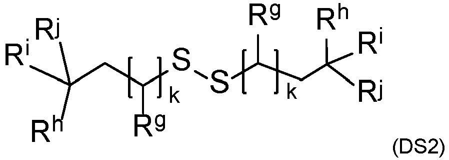 wherein:
R^{g} is H or C₁-C₆ alkyl;
R^{h} and Rⁱ are independently selected from the group consisting of H, C₁-C₆ alkyl, COOR^{g}, SH and OH;
Rj is selected from the group consisting of NHR^{g}, COOR^{g}, SH and OH; and,
k is an integer of 0 to 10.

As regards general formula DS2, it is preferable that: R^{g} is H; R^{h} is H or C₁-C₆ alkyl; Rⁱ is independently selected from the group consisting of H, C₁-C₆ alkyl, COOR^{g}, SH and OH; R^{j} is selected from the group consisting of NHR^{g}, COOR^{g}, SH and OH; and k is an integer of 0 to 10. In particular exemplars: R^{g} is H; R^{h} is H; Rⁱ is independently selected from the group consisting of H, C₁-C₆ alkyl and COOR^{g}; R^{j} is selected from the group consisting of NHR^{g} and COOR^{g}; and k is an integer of 0 to 10. And exemplary compounds in accordance with Formula (DS2) include but are not limited to: 3,3'-dithiopropionic acid; 4,4'-dithiobutyric acid; bis-(10-carboxydecyl)disulfide; 2,2'-dithiobisethanamine (*cystamine*); and, (2R)-2-amino-3-[[(2*R*)-2-amino-2-carboxyethyl]disulfanyl]propanoic acid (*L-cystine*)*.*

Further compounds having utility as the healing agent include liquid mercaptan-terminated polysulfide polymers, commercial examples of which include: Thiokol^{®} polymers (available from Morton Thiokol), in particular the types LP-3, LP-33, LP-980, LP-23, LP-55, LP-56, LP-12, LP-31, LP-32 and LP-2 thereof; and, Thioplast^{®} G polymers (from Akzo Nobel), in particular the types G10, G112, G131, G1, G12, G21, G22, G44 and G4.

### Accelerator

The composition of the present invention should preferably comprise at least one accelerator. The accelerator is a substance that promotes the reaction between the epoxide groups and the epoxide-reactive groups of the curing agent and, where applicable, of the healing agent, for instance the reaction between the amine or thiol groups and the epoxide groups. A specific example relates to the use of an amine accelerator which functions by de-protonation of reactive thiol (-SH) groups present to thiolate (-S"), which thiolate reacts with epoxide group by nucleophilic ring opening polymerization.

Without intention to the limit the accelerators used in the present invention, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as 2piperazin-1-ylethanamine, 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; iv) phenol resins; and, v) phosphites, such as di- and triphenylphosphites.

In an embodiment, the accelerator for curing the composition based on the epoxide compound(s) may be a photobase generator: upon exposure to UV radiation - typically in the wavelength from 320 to 420 nm - said photobase generator releases an amine, which catalyses the addition of the epoxide reactive groups to the epoxide. The photobase generator is not specifically limited so long as it generates an amine directly or indirectly with light irradiation. The preparation of suitable photobase generator compounds is known in the art and an instructive reference includes U.S. 5,650,261 (Winkel). That aside, suitable photobase generators which may be mentioned include: benzyl carbamates; benzoin carbamates; o-carbamoylhydroxyamines; O-carbamoyloximes; aromatic sulfonamides; alpha-lactams; N- (2-allylethenyl)amides; arylazide compounds, N-arylformamides, and 4-(ortho-nitrophenyl)dihydropyridines.

In an alternative embodiment, an acid accelerator may be selected from photoacid generators (PAGs): upon irradiation with light energy, ionic photoacid generators undergo a fragmentation reaction and release one or more molecules of Lewis or Bronsted acid that catalyse the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the invention include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) cantered onium salts, with a preference being noted for I-, S-, P-, Se- N- and C-centred onium salts, such as those selected from sulfoxonium, iodonium, sulfonium, selenonium, pyridinium, carbonium and phosphonium.

As is known in the art, the nature of the counter-anion in the ionic photoacid generator (PAG) can influence the rate and extent of cationic addition polymerization of the epoxide groups with, for illustration, the order of reactivity among commonly used nucleophilic anions being SbF₆ > AsF₆ > PF₆ > BF₄. The influence of the anion on reactivity has been ascribed to three principle factors which the skilled artisan should compensate for in the present invention: (1) the acidity of the protonic or Lewis acid generated; (2) the degree of ion-pair separation in the propagating cationic chain; and, (3) the susceptibility of the anions to fluoride abstraction and consequent chain termination.

*In toto* photoinitiator should be present in the photo-curable composition in amount of from 0 to 5 wt.%, for example from 0 to 2.0 wt.% or from 0 to 1.5 wt.%, based on the total weight of the composition.

As would be recognized by the skilled artisan, photosensitizers can be incorporated into the compositions to improve the efficiency with which the photoinitiator uses the energy delivered. The term *"photosensitizer"* is used in accordance with its standard meaning to represent any substance that either increases the rate of photoinitiated polymerization or shifts the wavelength at which polymerization occurs. When present, photosensitizers should be used in an amount of from 5 to 25 wt.%, based on the weight of the photoinitiator.

The use of photoinitiator(s) - and where applicable photosensitizer(s) - may produce residue compounds from the photochemical reaction in the final cured product. The residues may be detected by conventional analytical techniques such as: infrared, ultraviolet and NMR spectroscopy; gas or liquid chromatography; and mass spectroscopy. Thus, the present invention may comprise cured matrix (co-)polymers and detectable amounts of residues from at least the photoinitiator. Such residues are present in small amounts and do not normally interfere with the desired physiochemical properties of the final cured product.

Without intention to limit the present invention, a mixture comprising one or more photoinitiators may be irradiated with activating radiation to polymerize monomeric component(s) contained therein. The purpose of the irradiation is to generate the active species from the photoinitiator which initiates the cure reactions. Once that species is generated, the cure chemistry is subject to the same rules of thermodynamics as any chemical reaction: the reaction rate may be accelerated by heat.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

It is preferred in the present invention to employ an accelerator comprising or consisting of at least one tertiary amine, at least one amidine or mixtures thereof. More particularly, said accelerator should be selected from the group consisting of imidazole, methylimidazole, benzyldimethylamine, 1,8-diazabicyclo[5.4.0]undec-7-ene, 1,4-diazabicyclo(2,2,2)octane and mixtures thereof.

The accelerator should desirably be present in the composition in an amount of from 0.1 to 5 wt.%, based on the weight of the composition: the accelerator may preferably constitute from 0.1 to 2 wt.%, for example from 0.1 to 1 wt.% of said composition.

### Electrolyte

The composition comprises from 0.5 to 15 wt.%, based on the weight of the composition, of electrolyte: the electrolyte may preferably constitute from 0.5 to 10 wt.%, for example from 0.5 to 5 wt.%, of said composition. These quantities are preferred because a quantity greater than 15 wt.% of electrolyte based on the weight of said composition, may result in a good disbonding effect but cure may be incomplete and, therefore, initial adhesive properties may be adversely affected. Conversely, at amounts less than 0.5 wt.%, based on the weight of said composition, the disbonding effect may be compromised.

The electrolyte comprises or consists of at least one salt in accordance with Formula (I) or Formula (II): 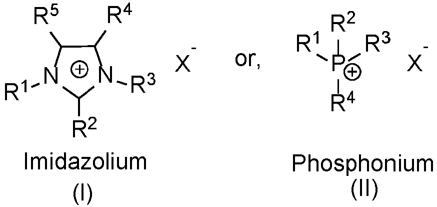 wherein:
R¹, R², R³, R⁴ and R⁵ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN or -NO₂;
R^{q} is C₁-C₆ alkyl; and,
X⁻ is a counter anion.

For completeness, in Formula (I) and Formula (II) the terms C₁-Cₙ alkyl, C₃-Cₙ cycloalkyl, C₆-C₁₈ aryl, C₇-C₂₄ aralkyl, C₂-C₂₀ alkenyl expressly include groups wherein one or more hydrogen atoms are substituted by halogen atoms (e.g., C₁-C₁₈ haloalkyl) or hydroxyl groups (e.g., C₁-C₁₈ hydroxyalkyl). In particular, it is preferred that R¹, R², R³, R⁴ and R⁵ are independently selected from hydrogen, C₁-C₁₈ alkyl, C₁-C₁₈ haloalkyl, C₁-C₁₈ hydroxyalkyl or C₃-C₁₈ cycloalkyl. For example, R¹, R², R³, R⁴ and R⁵ may be independently selected from hydrogen, C₁-C₁₈ alkyl or C₁-C₁₈ haloalkyl.

There is no particular intention to limit the counter anion (X-) which may be employed in the electrolyte. Exemplary anions may be selected from:
- Halides;
- Pseudohalides and halogen-containing compounds of the formulae PF₆⁻, CF₃SO₃⁻, (CF₃SO₃)₂N⁻, CF₃CO₂⁻ and CCl₃CO₂⁻,
- CN⁻, SCN⁻ and OCN⁻;
- Phenates;
- Sulfates, sulfites and sulfonates of the general formulae SO₄²⁻, HSO₄⁻, SO₃²⁻, HSO₃ ⁻, R^{a}OSO₃⁻ and R^{a}SO₃⁻;
- Phosphates of the general formulae PO₄³⁻, HPO₄²⁻, H₂PO₄⁻, R^{a}PO₄²⁻, HR^{a}PO₄⁻ and R^{a}R^{b}PO₄⁻;
- Phosphonates and phosphinates of the general formulae R^{a}HPO₃⁻,R^{a}R^{b}PO₂⁻ and R^{a}R^{b}PO₃⁻;
- Phosphites of the general formulae: PO₃³⁻, HPO₃²⁻, H₂PO₃⁻, R^{a}PO₃²⁻, R^{a}HPO₃⁻ and R^{a}R^{b}PO₃⁻;
- Phosphonites and phosphinites of the general formulae R^{a}R^{b}PO₂⁻, R^{a}HPO₂⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃³⁻, HBO₃²⁻, H₂BO₃⁻, R^{a}R^{b}BO₃⁻, R^{a}HBO₃ ⁻, R^{a}BO₃²⁻, B(OR^{a})(OR^{b})(OR^{c})(OR^{d})⁻, B(HSO₄)⁻ and B(R^{a}SO₄)⁻;
- Boronates of the general formulae R^{a}BO₂²⁻ and R^{a}R^{b}BO⁻;
- Carbonates and carbonic acid esters of the general formulae HCO₃⁻, CO₃²⁻ and R^{a}CO₃⁻;
- Silicates and silicic acid esters of the general formulae SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻ and HR^{a}R^{b}SiO₄⁻;
- Alkyl- and arylsilanolates of the general formulae R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻ and R^{a}R^{b}SiO₃²⁻;
- Pyridinates and pyrimidinates;
- Carboxylic acid imides, bis(sulfonyl)imides and sulfonylimides of the general formulae: 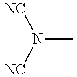 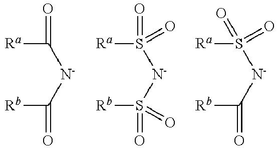
- Methides of the general formula: 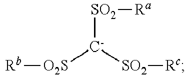
- Alkoxides and aryloxides of the general formula R^{a}O⁻; and,
- Sulfides, hydrogen sulfides, polysulfides, hydrogen polysulfides and thiolates of the general formulae S²⁻, HS⁻, [Sᵥ]²-, [HSᵥ]⁻ and [R^{a}S]⁻
in which general formulae
v is a whole positive number of from 2 to 10; and,
R^{a}, R^{b}, R^{c} and R^{d} are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

In an embodiment, the counter anion (X⁻) is preferably selected from the group consisting of: sulfates of the general formula R^{a}OSO₃⁻; sulfonates of the general formula R^{a}SO₃⁻; phosphates of the general formulae R^{a}PO₄²⁻, HR^{a}PO₄⁻ and R^{a}R^{b}PO₄⁻; phosphonates and phosphinates of the general formulae R^{a}HPO₃⁻, R^{a}R^{b}PO₂⁻ and R^{a}R^{b}PO₃⁻; phosphites of the general formulae: PO₃³⁻, HPO₃²⁻, H₂PO₃⁻, R^{a}PO₃²⁻, R^{a}HPO₃⁻ and R^{a}R^{b}PO₃⁻; phosphonites and phosphinites of the general formulae R^{a}R^{b}PO₂⁻, R^{a}HPO₂⁻, R^{a}R^{b}PO⁻ and R^{a}HPO⁻; and, carboxylic acid imides, bis(sulfonyl)imides and sulfonylimides of the general formulae: 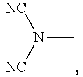 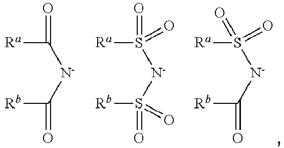 wherein R^{a} and R^{b} are as defined above.

As regards said counter anion (X⁻) of Formula (I) or Formula (II), it is preferred that R^{a} and R^{b} are independently selected from hydrogen, C₁-C₁₂ alkyl or C₁-C₁₂ haloalkyl. For example, R^{a} and R^{b} may be independently selected from hydrogen, C₁-C₈ alkyl or C₁-C₈ haloalkyl or R^{a} and R^{b} may be independently selected from hydrogen, C₁-C₄ alkyl or C₁-C₄ haloalkyl. Particularly preferred counter anions (X-) are methyl sulfate, ethyl sulfate, methansulfonate, bis(trifluoromethylsulfonyl) imide and diethylphosphate.

The electrolyte of the composition is preferably selected from the group consisting of: 1-ethyl-3-methyl-1H-imidazol-3-um methansulfonate; 1-ethyl-3-methyl-1H-imidazol-3-um methyl sulfate; 1-methylimidazolium bis(trifluoromethylsulfonyl)imide; 3-methylimidazolium bis(trifluoromethylsulfonyl) imide; 1-ethyl-3-methylimidazolium bis(trifluoromethylsulfonyl)imide; 1-propyl-3-methylimidazolium bis(trifluoromethylsulfonyl)imide; 1-butyl-3-methylimidazolium bis(trifluoromethylsulfonyl)imide; 1-butyl-2,3-dimethylimidazolium bis(trifluoromethylsulfonyl) imide; 1-hexyl-3-methylimidazolium bis(trifluoromethylsulfonyl)imide; 1-octyl-3-methylimidazolium bis(trifluoromethylsulfonyl)imide; 1-methyl-3-octylimidazolium bis(trifluoromethylsulfonyl)imide; 1-decyl-3-methylimidazolium bis(trifluoromethylsulfonyl)imide; 1-dodecyl-3-methylimidazolium bis(trifluoromethylsulfonyl)imide; tetraethylphosphonium bis(trifluoromethylsulfonyl)imide; tetrabutylphosphonium bis(trifluoromethylsulfonyl)imide; tetraoctylphosphonium bis(trifluoromethylsulfonyl)imide; trihexyl(tetradecyl)phosphonium bis(trifluoromethylsulfonyl)imide; tridecyl(tetradecyl)phosphonium bis(trifluoromethylsulfonyl)imide; tributyl(methyl)phosphonium diethylphosphate; tributyl(ethyl)phosphonium diethylphosphate; tetraoctylphosphonium diethylphosphate; and, mixtures thereof. A particular preference for the use of at least one of 1-ethyl-3-methyl-1H-imidazol-3-um methansulfonate, 1-ethyl-3-methyl-1H-imidazol-3-um methyl sulfate, trihexyl(tetradecyl)phosphonium bis(trifluoromethylsulfonyl)imide, tributyl(methyl)phosphonium diethylphosphate and tributyl(ethyl)phosphonium diethylphosphate may be mentioned.

The presence in the electrolyte of compatible electrolytic compounds not conforming to Formula (I) or Formula (II) is not precluded. However, said compound(s) of Formula (I) or Formula (II) should constitute at least 90 wt.%, preferably at least 95%, more preferably at least 99 wt.% and most preferably 100 wt.% of the electrolyte.

### Rheology Control Agent

The composition of the present invention will conventionally comprise a rheology control agent consisting of: electrically non-conductive fillers; electrically conductive fillers; or, mixtures thereof.

The presence of electrically non-conductive fillers in the composition may serve to moderate the viscosity of the composition and to reduce the coefficient of thermal expansion of the adhesive. Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as electrically non-conductive fillers. However, such non-conductive fillers will conventionally have an average volume particle size, as measured by laser diffraction / scattering methods, of from 0.01 to 1500 µm, for example from 0.1 to 1000 µm or from 0.1 to 500 µm.

Exemplary non-conductive fillers include but are not limited to barium sulphate, calcium carbonate, calcium oxide, calcium metasilicate, silica, fumed silica, sand, quartz, zeolites, bentonites, magnesium carbonate, diatomite, alumina, clay, talcum, flint, mica, glass powder, zinc oxide and other ground mineral substances. Short fibres such as glass fibres, glass filament, polyacrylonitrile, carbon fibres, polyethylene fibres can also be added. A preliminary preference may be noted for non-conductive filler selected from the group consisting of: calcium carbonate; calcium oxide; calcium metasilicate; talcum; fumed silica; silica; barium sulphate; and, mixtures thereof. The use of precipitated and / or fumed (pyrogenic) silica as a rheology control agent in the present compositions is particularly preferred: such precipitated or pyrogenic silica should desirably have a BET surface area of from 25 to 500 m2/g, for example from 100 to 250 m2/g as measured by means of nitrogen adsorption according to DIN 66131. A commercial example of such a fumed (pyrogenic) silica is Aerosil 200, available from Evonik Industries.

Also suitable as electrically non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less, preferably between 100 µm and 200 µm.

Non-conductive fillers which impart thixotropy to the composition may have utility in certain applications: such fillers are also described as rheological adjuvants, e.g., hydrogenated castor oil, fatty acid amides, or swellable plastics such as PVC.

As noted, the compositions according to the present invention may additionally contain electrically conductive fillers as at least part of the rheology control agent. Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 1 to 500 µm, for example from 1 to 200 µm.

Exemplary conductive fillers include, but are not limited to: silver; copper; gold; palladium; platinum; nickel; gold or silver-coated nickel; carbon black; carbon fibre; carbon nanotubes; graphite; aluminium; indium tin oxide; silver coated copper; silver coated aluminium; metallic coated glass spheres; metallic coated filler; metallic coated polymers; silver coated fibre; silver coated spheres; antimony doped tin oxide; conductive nanospheres; nano silver; nano aluminium; nano copper; nano nickel; carbon nanotubes; and, mixtures thereof. The use of particulate silver and / or carbon black as the conductive filler is preferred.

The total amount of rheology control agent present in the compositions of the present invention will preferably be from 1 to 55 wt.%, and more preferably from 15 to 55 wt.%, based on the total weight of the composition. The desired viscosity of the curable composition formed upon mixing its ingredients will generally be determinative of the total amount of rheology control agent added. The composition should desirably have a viscosity of from 3000 to 150,000 mPa.s, for example from 5000 to 100,000 mPa.s: within such a viscosity range, the composition should be readily extrudable out of a suitable dispensing apparatus, such as a tube.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are: solubilizers; tougheners; plasticizers; stabilizers including UV stabilizers; antioxidants; reactive diluents; drying agents; adhesion promoters; fungicides; flame retardants; colour pigments or colour pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total composition and preferably should not comprise more than 20 wt.% of the composition.

Based on the weight of the composition, solubilizer may constitute from 0 to 15 wt.%, for example from 1 to 10 wt.% or from 1 to 5 wt.%. The solubilizer has the function of promoting the miscibility of the electrolyte within the adhesive composition: the solubilizer may or may not form part of the polymer matrix formed upon curing of the adhesive composition but does serve to facilitate ion transfer therein. The solubilizer is, as such, preferably a polar compound and should desirably be liquid at room temperature.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C2-C3)oxyalkylene modified polydimethylsiloxanes; polpolyhydric alcohols; and, sugars. For completeness, fluorinated silicone surfactants, such as fluorinated polysilanes, are intended to be encompassed within the term silicone surfactants.

Polyhydric alcohols and sugars such as ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having a weight average molecular weight of from 200 to 10000 g/mol, for example 200 to 2000 g/mol, may be noted.

The optional presence of tougheners - in an amount up to 10 wt.%, based on the weight of the composition - can in certain embodiments be advantageous to the disbonding of the cured adhesive. Without intention to be bound by theory, tougheners may facilitate phase separation within the cured adhesive under the application of electrical potential. Exemplary tougheners may be selected from: epoxy-elastomer adducts; and toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551.

Moreover, exemplary commercial epoxy/elastomer adducts for use herein include but are not limited to: HYPDX RK8-4 commercially available from CVC Chemical; and B-Tough A3 available from Croda Europe Limited.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20⁰C or lower, more preferably -40⁰C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and METABLEN SX-006 available from Mitsubishi Rayon.

*A "plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer, but these are not preferred due to their toxicological potential.

*"Stabilizers"* for purposes of this invention are to be understood as antioxidants, UV stabilizers, thermal stabilizers, or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be from 0 to 15 wt.%, for example from 0 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the initial curable composition, the above-described ingredients are brought together and mixed. As is known in the art, to form one component (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to moisture, heat or irradiation or which limit or prevent the activation of a constituent latent catalyst. As such, it will often be preferred that the ingredients are not mixed by hand but are instead mixed by machine - a static or dynamic mixer, for example - in pre-determined amounts under anhydrous conditions without intentional heating or photo-irradiation.

The initial use of the one component (1K) curable compositions in the formation of a first bonded structure will now be described. In accordance with the broadest process aspects of the present invention, the above-described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions of the present invention to the preferably pre-treated substrate may be facilitated by the application of a primer thereto. Indeed, primer compositions may be necessary to ensure efficacious fixture and / or cure times of the adhesive compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and US Patent No. 6,852,193.

The compositions are then applied to the preferably pre-treated, optionally primed surfaces of the substrate by conventional application methods such as: brushing; roll coating; doctor-blade application; printing methods; and, spraying methods, including but not limited to air-atomized spray, air-assisted spray, airless spray, and high-volume low-pressure spray.

As noted above, the present invention provides a bonded structure comprising: a first substrate having an electrically conductive surface; and, a second substrate having an electrically conductive surface, wherein the cured electrochemically disbondable one-part (1K) adhesive composition as defined hereinabove and in the appended claims is disposed between said first and second substrates. To produce such a structure, the adhesive composition may be applied to at least one internal surface of the first and / or second substrate and the two layers then subsequently contacted, optionally under the application of pressure, such that the electrically disbondable hot melt adhesive composition is interposed between the two substrates.

It is recommended that the compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the invention typically occurs at temperatures in the range of from 40°C to 200°C, preferably from 50°C to 190°C, and in particular from 60°C to 180°C. The temperature that is suitable depends on the specific compounds present and the desired curing rate and can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the one-part (1K) composition may be raised above the mixing temperature and / or the application temperature using conventional means including microwave induction.

For completeness, it is noted that the present invention does not preclude the initial preparation of epoxy adhesives in the form of *"film adhesive".* A pre-polymer mixture of epoxide compound(s), curing agent, healing agent, electrolyte and other desired components is applied as a coating onto plastic substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

The initial bonding and subsequent disbonding and re-bonding of the compositions of the present invention will be described with reference to the appended drawings in which:
Figure 1a illustrates a bonded structure in accordance with a first embodiment of the present invention.
Figure 1b illustrates a bonded structure in accordance with a second embodiment of the present invention.
Figure 2a illustrates the initial disbonding of the structure of the first embodiment upon passage of a current across that structure.
Figure 2b illustrates the initial disbonding of the structure of the second embodiment upon passage of a current across that structure.
Figure 3a illustrates the reformation of a bonded structure in accordance with a first embodiment of the present invention.
Figure 3b illustrates the reformation of a bonded structure in accordance with a second embodiment of the present invention.
Figure 3c illustrates the reformation of a bonded structure in accordance with a third embodiment of the present invention.

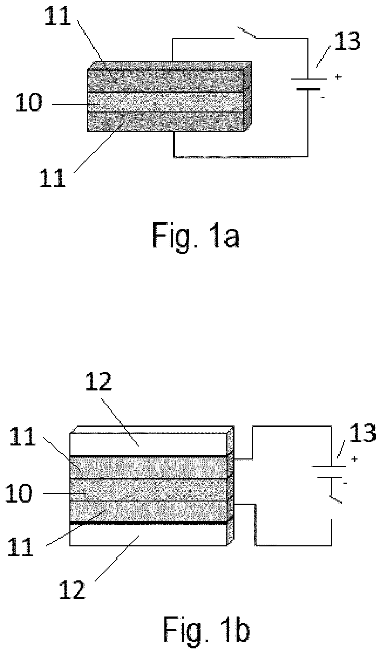

As shown in Figure 1a appended hereto, a bonded structure is provided in which a layer of cured adhesive (10) is disposed between two conductive substrates (11). A layer of non-conductive material (12) may be disposed on the conductive substrates (11) to form the more complex bonded structure as depicted in Fig. 1b. Each layer of conductive substrate (11) is in electrical contact with an electrical power source (13) which may be a battery or an AC-driven source of direct current (DC). The positive and negative terminals of that power source (13) are shown in one fixed position, but the skilled artisan will of course recognize that the polarity of the system can be reversed.

The two conductive substrates (11) are shown in the form of a layer which may be constituted by *inter alia:* a metallic film; a metallic sheet; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and zinc stannate. The selection of the conductive material aside, the skilled artisan will recognize that the efficacy of the disbonding operation may be diminished where the conductive substrates (11) are in the form of a grid or mesh which offers limited contact with the layer of cured adhesive (10).

When an electrical voltage is applied between each conductive substrate (11), current is supplied to the adhesive composition (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the disbondable composition from the substrate.

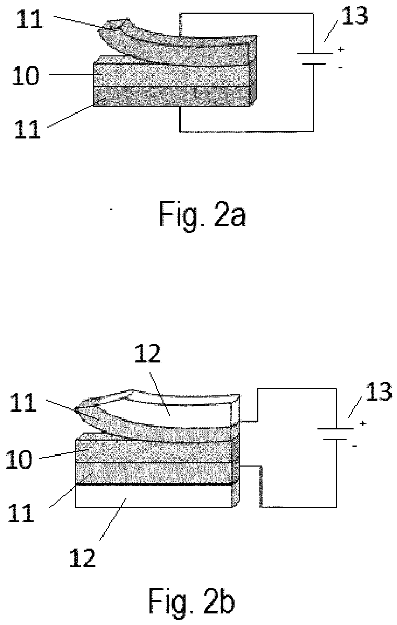

As depicted in Figures 2a and 2b, the disbonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the adhesive layer (10) may be moderated so that disbonding occurs at either the positive or negative interface or simultaneously from both. For some embodiments, a voltage applied across both surfaces so as to form an anodic interface and a cathodic interface will cause disbonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for disbonding to occur. Sinusoidal, rectangular, and triangular waveforms might be appropriate in this regard and may be applied from a controlled voltage or a controlled current source.

Without intention to limit the present invention, it is considered that the disbonding operation may be performed effectively where at least one and preferably both of the following conditions are instigated: a) an applied voltage of from 0.5 to 100 V; and b) the voltage being applied for a duration of from 1 second to 60 minutes. Where the release of the conductive substrate from the cured adhesive is to be facilitated by the application of a force - exerted via a weight or a spring, for instance - the potential might only need to be applied for the order of seconds. In some embodiments potential of 5V for a duration of 10 minutes is sufficient to have a disbonding effect, whereas in some embodiments, potential of 3.5V for a duration of 30 minutes is sufficient.

It is desired that after the disbonding, the adhesive composition is disposed solely on a first substrate or on a second substrate, meaning that one of the substrates is substantially free of adhesive.

In the present disclosure, the method of forming of a second bonded structure via re-bonding comprises the steps of: providing a first re-bonding substrate (RB1) which is obtained from the aforedescribed electrochemical disbonding step and which has residual cured adhesive composition disposed thereon; contacting said first re-bonding substrate (RB1) with a second re-bonding substrate (RB2) to interpose the residual cured adhesive composition therebetween; and, thermally treating the residual cured adhesive composition. The claimed term *"third substrate"* may be used interchangeably with second re-bonding substrate (RB2).

There is no particular intention to limit the second re-bonding substrate (RB2) which is used: the composition, physicochemical properties and structure of the second re-bonding substrate (RB2) may be selected independently of the substrates used in the initial bonded structure. However, it is envisaged that this substrate (RB2) may be provided by the remaining substrate from the disbonding operation, such that substrates (RB1, RB2) in the re-bonded structure correspond to the first and second substrates of the initial bonded structure. In the alternative, a distinct substrate may be used as substrate (RB2). The use of both conductive and non-conductive substrates should be considered in this regard: the selection of the former permits the repetition of the electrochemical disbonding operation as an anodic and cathodic interface may be generated by the application of the voltage across the re-bonded structure. The selection of a non-conductive substrate as substrate (RB2) conversely will preclude such an iterative process.

As described above, a conductive substrate (RB2) may be constituted by *inter alia*: a metallic film; a metallic sheet; a metallic mesh or grid; deposited metal particles; a resinous material which is rendered conductive by virtue of conductive elements disposed therein; or a conducting oxide layer. Exemplary non-conductive substrates include: thermoplastic polymeric substrates; thermoset polymeric substrates; cellulosic substrates, such as wood; leather; textile substrates; glass substrates; ceramic substrates; and, composite materials.

Irrespective of the selection of the second re-bonding substrate (RB2), that substrate may be pre-treated priorto said contacting step. It is advisable to pre-treat the relevant surfaces to remove foreign matter there from and any of the techniques mentioned above for doing so may be utilized.

To ensure efficacious fixture times, a primer composition consisting of the healing agent as defined above and optionally a solvent and / or a non-reactive diluent may be interposed between the first (RB1) and second (RB2) re-bonding substrates by the aforementioned contacting step. To achieve this, it is conceived that a layer of the primer composition may be applied to the residual adhesive disposed on the first re-bonding substrate (RB1). More conventionally, however, the optionally pre-treated, second re-bonding substrate (RB2) may be treated with the primer composition before being brought into contact with the first re-bonding substrate (RB1).

The primer composition might be applied to the relevant surface at a wet film thickness of from 5 to 100 µm, for example from 5 to 50 µm. In an alternative expression of this application, which is not intended to be mutually exclusive of that given above, the primer composition may be applied at a coating weight of from 0.01 to 10 g/m², for example from 0.1 to 2 g/m².

The thermal treatment of the residual cured adhesive composition should obviously be sufficient to activate the disulfide re-arrangement in the residual adhesive. The thermal treatment typically comprises exposing said residual cured adhesive composition to a temperature in the range of from 60°C to 200°C, preferably from 60°C to 175°C, and in particular from 60°C to 120°C. The temperature that is suitable depends on the specific compounds present and can be determined in the individual case by the skilled artisan, using simple preliminary tests if necessary.

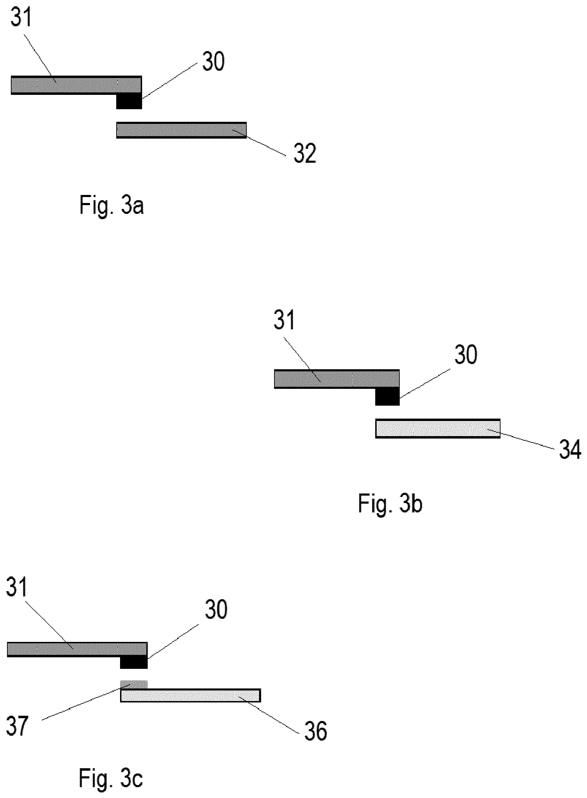

Exemplary embodiments of the reformation of a bonded structure using the adhesive compositions of the present invention are illustrated in Figures 3a to 3c appended hereto: these Figures depict the presence of a residual cured adhesive composition (30) on a conductive, first re-bonding substrate (31) obtained after an electrochemical disbonding operation.

In the illustrative method of Figure 3a, a conductive second re-bonding substrate (32) which had itself been de-bonded is brought back into contact with the residual adhesive layer (30). That second re-bonding substrate is illustrated here as having no residual adhesive thereon which may be either consequential to the disbonding operation or the result of a pre-treatment step which removes matter from the surface thereof. The contacting of the first and second re-bonding substrates (31, 32) interposes the previously cured adhesive therebetween. The resultant composite structure is then subjected to the thermal treatment conditions described above.

In the illustrative embodiment of Figure 3b, the second re-bonding substrate (34) is a new substrate in the sense that it was not part of the initial composite structure which was de-bonded. That second re-bonding substrate (34) may have the same or different composition, physicochemical properties, and structure to the conductive first re-bonding substrate (31). That aside, the second re-bonding substrate (34) is brought into contact with the conductive first re-bonding substrate (31) to interpose the residual adhesive layer (30) therebetween. The resultant composite structure is then subjected to the thermal treatment conditions described above.

For completeness, it is not precluded that the second re-bonding substrate (34) of Figure 3b - before being bonded - is subjected to a pre-treatment step to remove foreign matter therefrom, as previously described.

In the illustrative embodiment of Figure 3c, the second substrate (36) is again a new substrate in the sense that it was not part of the initial composite structure which was de-bonded. And again, that second re-bonding substrate (36) may have the same or different composition, physicochemical properties and structure to the conductive first re-bonding substrate. However, in this embodiment, the optionally pre-treated second substrate (36) is primed with a layer (37) of a composition consisting of the healing agent and optionally a solvent or non-reactive diluent. The optionally pre-treated, primed second re-bonding substrate (36) is brought into contact with the conductive first re-bonding substrate (31) to interpose the residual adhesive layer (30) therebetween, ensuring that said adhesive layer contacts the applied primer layer. The resultant composite structure is then subjected to the thermal treatment conditions described above.

The following examples are illustrative of the present invention and are not intended to limit the scope of the invention in any way.

### EXAMPLES

The following materials were employed in the Examples:

| | |
|---|---|
| DER 331: | Bisphenol-A epoxy resin, available from Olin Corporation. |
| Thiocure 330: | Bruno Bock. Trimethylolpropane tri (3-mercaptopropionate), available from |
| Ajicure PN-H: | Curing catalyst, available from Ajinmoto Fine Techno. Co. Ltd. |
| Bis(2-aminophenyl)disulfide: | Curing agent (rebonding), available from Apollo Scientific Ltd. |
| 4-aminophenyl disulfide: | Curing agent (rebonding), available from Sigma Aldrich. |
| Cyphos IL169: | Solvay. Tributyl(ethyl)phosphonium diethylphosphate, available from |
| EMIM MS: | Proionic. 1-Ethyl-3-methylimidazolium methanesulfonate available from |
| Premix 182 | Premix of Epoxy (DER331), fumed silica and barbituric acid, available from Henkel Corporation. |
| GPX801: | LLC. Carbon black, available from Applied Nanostructured Solutions, |
| Omyacarb 4-HD: | Calcium carbonate filler, available from Omya. |
| Luzenac 2: | Lamellar talc filler, available from Imerys. |
| Aerosil 202: | Fumed silica after-treated with polydimethylsiloxane, available from Evonik Industries. |

The following test methods have been used to characterize the formulations:
Initial Bond Strength, Tensile Lap Shear (TLS) Test: The substrate tested was stainless steel (1.4301, thickness 1.5mm). The substrate was cut into 2.5 cm x 10 cm plates for tensile testing. The bond overlapping area for each plate was 2.5 cm x 1.0 cm (1" x 0.4") with a bond thickness of 150 microns. For the initial bonding operation, the applied adhesive compositions were cured in the overlapping region at 100°C for 30 minutes. Tensile lap shear (TLS) tests were then performed at room temperature based upon EN 1465:2009 (German version) *Adhesives* - *Determination of Tensile Lap-shear Strength of Bonded Assemblies.* The test specimens were placed in the grips of a universal testing machine and pulled at 10 mm/min until failure occurs. The grips used to secure the ends of the assembly were aligned so that the applied force was applied through the centreline of the specimen. The type of failure observed could be either adhesive - wherein the adhesive separates from one of the substrates - or cohesive wherein the adhesive ruptures within itself.
Electrochemical Disbonding, Tensile Lap Shear (TLS) Test (EN 1465:2009): Test specimens were prepared in accordance with the above methodology but, prior to being placed in the universal testing machine, a constant potential (30 V) was applied across the overlapping bonded area for a period of 20 minutes.
Re-Bonding Methods: Specimens obtained after electrochemical disbonding were processed in one of three manners.
   a) Method A: As depicted in Figure 3a, the stainless-steel plates which had been utilized as the test specimens in the TLS test following electrochemical disbonding, were used to regenerate the bonded assembly. The bond overlapping area was again 2.5 cm x 1.0 cm (1" x 0.4") with a bond thickness of 150 microns. The interposed adhesive was cured in the overlapping region at either 100°C or 140°C for 30 minutes, the temperature used being recorded in the Tables below.
   b) Method B: As depicted in Figure 3b, one new stainless-steel plate (1.4301, 2.5 cm x 10 cm x 1.5mm) was used to regenerate the bonded assembly. The bond overlapping area was 2.5 cm x 1.0 cm (1" x 0.4") with a bond thickness of 150 microns. The interposed adhesive was cured in the overlapping region at either 100°C or 140°C for 30 minutes, the temperature used being recorded in the Tables below.
   c) Method C: As depicted in Figure 3c, a new stainless-steel plate (1.4301, 2.5 cm x 10 cm x 1.5mm) was used to regenerate the bonded assembly, wherein the surface of the plate had been primed with the healing agent present in the adhesive composition, that is either 4-aminophenyl disulfide or bis(2-aminophenyl)disulfide (Tables 1, 3). The healing agent was applied in an amount of 0.2 g/cm² in the region of overlap. The bond overlapping area was 2.5 cm x 1.0 cm (1" x 0.4") with a bond thickness of 150 microns. The interposed adhesive was cured in the overlapping region at either 100°C or 140°C for 30 minutes, the temperature used being recorded in the Tables below.

In accordance with the TLS testing procedure above (EN 1465:2009), the bonded assemblies obtained in accordance with each of methods A to C were placed in the grips of a universal testing machine and pulled at 10 mm/min until failure occurred. The grips used to secure the ends of the assembly were aligned so that the applied force was applied through the centreline of the specimen. The type of failure observed could be either adhesive - wherein the adhesive separates from one of the substrates - or cohesive wherein the adhesive ruptures within itself.

Aging Test: The substrate tested was aluminium (AA6016, thickness 1.25mm). The substrate was cut into 2.5 cm x 10 cm plates for tensile testing. The bond overlapping area for each stated substrate was 2.5 cm x 1.0 cm with a bond thickness of 150 microns. The applied adhesive compositions were cured in the overlapping region at 100°C for 30 minutes. The specimens were stored in a climate chamber at 90% relative humidity and 65°C: at defined points in the storage (1 day, 7 days, 14 days and 21 days) tensile lap shear (TLS) tests were performed at room temperature based as per the above methodology (EN 1465:2009, German Version). The test specimens were placed in the grips of a universal testing machine and pulled at 10 mm/min until failure occurs.

### Example 1

A one component composition having a molar ratio of epoxide-reactive groups to epoxide groups of 0.8: 1 was prepared in accordance with Table 1 herein below. The given ingredients were mixed in a speed mixer (1200 rpm; 1 minute) to ensure the formation of a homogenous mixture.

**Table 1**

| **Ingredient** | **Percentage by Weight (wt.%)** |
|---|---|
| DER 331 | 27.7 |
| Thiocure 330 | 15.0 |
| Ajicure PN-H | 0.9 |
| 4-Aminophenyl disulfide | 5.0 |
| Cyphos IL 169 | 2.0 |
| Omyacarb 4-HD | 41.9 |
| Luzenac 2 | 4.9 |
| Aerosil R202 | 2.2 |
| GPX 801 | 0.1 |
| Premix 182 | 0.3 |

The tensile lap shear strength tests were performed as described above. The obtained results are shown in Table 2 herein below.

**Table 2**

| **Test Performed** | **Relevant Conditions** | **Value** |
|---|---|---|
| Initial Bond Strength (MPa) | | 18.7 |
| Bond Strength after 30 V, 20 minutes (MPa) | | 3.9 |
| Bond Strength after Aging at 90%RH, 65°C (MPa) | 9 Days | 12.7 |
| | 14 Days | 13.9 |
| Bond Strength after Re-Bonding (MPa) | Method A (100°C) | 12.9 |
| | Method B (100°C) | 14.7 |

It will be recognized that this adhesive composition does not show deleterious deterioration in bond strength when those bonded assembly was exposed to high humidity and high temperature conditions: this points to the potential utility of the composition in consumer products and devices which are required to be operable across a wide range of operating temperatures and other environmental conditions, including *inter alia* electronic devices. The adhesive composition also demonstrates effective electrochemical disbonding under the application of a potential of 30V for 20 minutes and further demonstrates at least 69% bond strength recovery across all the re-bonding methods used.

### Example 2

One component compositions, each having a molar ratio of epoxide-reactive groups to epoxide groups of 0.8: 1, were prepared in accordance with Table 3 herein below. The given ingredients were mixed in a speed mixer (1200 rpm; 1 minute) to ensure the formation of a homogenous mixture.

**Table 3**

| **Ingredient** | **Composition 2A (wt.%)** | **Composition 2B (wt.%)** |
|---|---|---|
| DER 331 | 27.7 | 27.7 |
| Thiocure 330 | 15.0 | 15.0 |
| Ajicure PN-H | 0.9 | 0.9 |
| 4-Aminophenyl disulfide | | 5.0 |
| Bis(2-aminophenyl)disulfide | 5.0 | |
| Cyphos IL 169 | 2.0 | |
| EMIM MS | | 2.0 |
| Omyacarb 4-HD | 41.9 | 41.9 |
| Luzenac 2 | 4.9 | 4.9 |
| Aerosil R202 | 2.2 | 2.2 |
| GPX 801 | 0.1 | 0.1 |
| Premix 182 | 0.3 | 0.3 |

The tensile lap shear strength tests were performed as described above. The obtained results are shown in Table 4 herein below.

**Table 4**

| **Test Performed** | **Relevant Conditions** | **Composition 2A** | **Composition 2B** |
|---|---|---|---|
| Initial Bond Strength (MPa) | | 12.4 | 18.8 |
| Bond Strength after 30 V, 20 minutes (MPa) | | 3.9 | 2.3 |
| Bond Strength after Re-Bonding (MPa) | Method A (100°C) | 9.7 | 8.9 |
| | Method B (100°C) | 9.9 | 5.3 |
| | Method C (100°C) | 6.6 | 9.5 |

Composition 2A demonstrates effective electrochemical disbonding under the application of a potential of 30V for 20 minutes and further demonstrates at least 53% bond strength recovery across all the re-bonding methods used. Composition 2B shows greater bond strength weakening under the applied potential and also demonstrates technically significant bond strength recovery using any of the re-bonding methods.

### Example 3

A 1K-component composition was prepared in accordance with Composition 2A of Table 3 herein above. As previously described, the given ingredients were mixed in a speed mixer (1200 rpm; 1 minute) to ensure the formation of a homogenous mixture.

In an iterative manner, the tensile lap shear strength tests were performed as described above. The obtained results are shown in Table 5 herein below.

**Table 5**

| **Test Performed** | **Relevant Conditions** | **Re-bonding Method A (140°C)** | **Re-bonding Method** B **(140°C)** |
|---|---|---|---|
| Initial Bond Strength (MPa) | | 18.7 | 18.7 |
| Bond Strength after 30 V, 20 minutes (MPa) | 1^{st} Electrochemical Disbonding | 0.0 | 3.9 |
| Bond Strength after Re-Bonding (MPa) | 1^{st} Re-bonding | 12.9 | 14.7 |
| Bond Strength after 30 V, 20 minutes (MPa) | 2^{nd} Electrochemical Disbonding | 3.5 | 0.0 |
| Bond Strength after Re-Bonding (MPa) | 2^{nd} Re-bonding | 8.2 | 5.6 |
| Bond Strength after 30 V, 20 minutes (MPa) | 3^{rd} Electrochemical Disbonding | 2.8 | Not Measured |

In view of the foregoing description and examples, it will be apparent to those skilled in the art that equivalent modifications thereof can be made without departing from the scope of the appended claims.

## Claims

1. A curable and electrochemically disbondable one component (1K) adhesive composition comprising:
a) at least one epoxide compound;
b) a curing agent consisting of one or more compounds which have at least one epoxide reactive group and which do not possess a disulfide functional group;
c) a healing agent consisting of one or more compounds which contain at least one disulfide functional group and optionally at least one epoxide reactive group selected from: hydroxyl; thiol; amine; or carboxyl; and,
d) an electrolyte,
wherein the composition is **characterized by** a molar ratio of epoxide-reactive groups to epoxide groups of from 0.6:1 to 1.2: 1.

2. The composition according to claim 1, wherein said composition comprises, based on the weight of the composition:
from 15 to 50 wt.% of a) at least one polyepoxide compound;
from 0.01 to 25 wt.% of b) a curing agent consisting of one or more compounds which have at least two epoxide reactive groups and which do not possess a disulfide functional group;
from 0.01 to 10 wt.% of c) said healing agent;
from 0.5 to 15 wt.% of d) said electrolyte; and,
from 0 to 55 wt.% of e) rheology control agent,
wherein the composition is **characterized by** a molar ratio of epoxide-reactive groups to epoxide groups of from 0.6: 1 to 1.1: 1.

3. The composition according to claim 2, wherein said composition comprises, based on the weight of the composition:
from 20 to 50 wt.%, preferably from 20 to 40 wt.% of a) said at least one polyepoxide compound;
from 5 to 25 wt.%, preferably from 5 to 20 wt.% of said curing agent consisting of one or more compounds which have at least two epoxide reactive groups and which do not possess a disulfide functional group;
from 1 to 10 wt.%, preferably from 2 to 8 wt.% of c) said healing agent;
from 0.5 to 10 wt.%, preferably from 0.5 to 5 wt.% of d) said electrolyte; and,
from 1 to 55 wt.%, preferably from 15 to 55 wt.% of e) said rheology control agent,
wherein the composition is **characterized by** a molar ratio of epoxide-reactive groups to epoxide groups of from 0.75: 1 to 0.95: 1.

4. The composition according to any one of claims 1 to 3, wherein said epoxide compound is selected from the group consisting of bisphenol A epoxy resin, bisphenol F epoxy resin and mixtures thereof.

5. The composition according to any one of claims 1 to 4, wherein b) said curing agent comprises or consists of a thiol-functional compound selected from the group consisting of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate, glycol dimercaptoacetate and mixtures thereof.

6. The composition according to any one of claims 1 to 5, wherein said healing agent comprises a compound selected from the group consisting of: bis(4-aminophenyl)disulfide; bis(2-aminophenyl) disulfide; 2-amino-4-chlorophenyl disufide; and, mixtures thereof.

7. The composition according to any one of claims 1 to 5, wherein said healing agent comprises a compound selected from the group consisting of: 3,3'-dithiopropionic acid; 4,4'-dithiobutyric acid; bis-(10-carboxydecyl)disulfide; 2,2'-dithiobisethanamine (*cystamine*); (2R)-2-amino-3-[[(2R)-2-amino-2-carboxyethyl]disulfanyl]propanoic acid (*L-cystine*); and, mixtures thereof.

8. The composition according to any one of claims 1 to 5, wherein said healing agent comprises a liquid mercaptan-terminated polysulfide polymer.

9. The composition according to any one of claims 1 to 8, wherein said electrolyte is selected from the group consisting of: 1-ethyl-3-methyl-1H-imidazol-3-um methansulfonate; 1-ethyl-3-methyl-1H-imidazol-3-um methyl sulfate; 1-methylimidazolium bis(trifluoromethylsulfonyl)imide; 3-methylimidazolium bis(trifluoromethylsulfonyl) imide; 1-ethyl-3-methylimidazolium bis(trifluoromethylsulfonyl)imide; 1-propyl-3-methylimidazolium bis(trifluoromethylsulfonyl)imide; 1-butyl-3-methylimidazolium bis(trifluoromethylsulfonyl)imide; 1-butyl-2,3-dimethylimidazolium bis(trifluoromethylsulfonyl) imide; 1-hexyl-3-methylimidazolium bis(trifluoromethylsulfonyl)imide; 1-octyl-3-methylimidazolium bis(trifluoromethylsulfonyl)imide; 1-methyl-3-octylimidazolium bis(trifluoromethylsulfonyl)imide; 1-decyl-3-methylimidazolium bis(trifluoromethylsulfonyl)imide; 1-dodecyl-3-methylimidazolium bis(trifluoromethylsulfonyl)imide; tetraethylphosphonium bis(trifluoromethylsulfonyl)imide; tetrabutylphosphonium bis(trifluoromethylsulfonyl)imide; tetraoctylphosphonium bis(trifluoromethylsulfonyl)imide; trihexyl(tetradecyl)phosphonium bis(trifluoromethylsulfonyl)imide; tridecyl(tetradecyl)phosphonium bis(trifluoromethylsulfonyl)imide; tributyl(methyl)phosphonium diethylphosphate; tributyl(ethyl)phosphonium diethylphosphate; tetraoctylphosphonium diethylphosphate; and, mixtures thereof.

10. The composition according to claim 9, wherein said electrolyte is selected from the group consisting of: 1-ethyl-3-methyl-1H-imidazol-3-um methansulfonate; 1-ethyl-3-methyl-1H-imidazol-3-um methyl sulfate; trihexyl(tetradecyl)phosphonium bis(trifluoromethylsulfonyl)imide; tributyl(methyl)phosphonium diethylphosphate; tributyl(ethyl)phosphonium diethylphosphate; and, mixtures thereof.

11. The composition according to any one of claims 2 to 10, wherein said rheology control agent comprises an electrically non-conductive filler selected from the group consisting of: calcium carbonate; calcium oxide; calcium metasilicate; fumed silica; silica; talcum; barium sulphate; and, mixtures thereof.

12. A bonded structure comprising
a first substrate having an electrically conductive surface; and,
a second substrate having an electrically conductive surface;
wherein the cured adhesive composition according to any one of claims 1 to 11 is disposed between the first and second substrates.

13. A method of disbonding the bonded structure as defined in claim 12, the method comprising the steps of:
i) applying a voltage across both surfaces to form an anodic interface and a cathodic interface; and
ii) disbonding the surfaces.

14. The method according to the claim 13, wherein the voltage applied in step i) is from 0.5 to 100 V and it is preferably applied for a duration of from 1 second to 60 minutes.

15. A method of treating the bonded structure as defined in claim 12, the method comprising the steps of:
i) applying a voltage across both surfaces to form an anodic interface and a cathodic interface; and
ii) disbonding the surfaces to provide a first substrate having said cured adhesive composition disposed on the electrically conductive surface thereof;
iii) contacting said first substrate with a third substrate such that the cured adhesive composition is interposed between the first and third substrates; and,
iv) thermally treating the residual cured adhesive composition to bond together said first and third substrates.

## Patentansprüche

1. Härtbare und elektrochemisch lösbare Ein-Komponenten-Klebstoffzusammensetzung (1K-Klebstoffzusammensetzung), umfassend:
a) mindestens eine Epoxidverbindung;
b) ein Härtungsmittel, bestehend aus einer oder mehreren Verbindungen, die mindestens eine epoxidreaktive Gruppe aufweisen und die keine funktionelle Disulfidgruppe besitzen;
c) ein Heilmittel, bestehend aus einer oder mehreren Verbindungen, die mindestens eine funktionelle Disulfidgruppe und optional mindestens eine reaktive Epoxidgruppe enthalten, die ausgewählt ist aus: Hydroxyl; Thiol; Amin; oder Carboxyl; und
d) ein Elektrolyt,
wobei die Zusammensetzung **gekennzeichnet ist durch** ein Molverhältnis von epoxidreaktiven Gruppen zu Epoxidgruppen von 0,6 : 1 bis 1,2 : 1.

2. Zusammensetzung nach Anspruch 1, wobei die Verbindung, basierend auf dem Gewicht der Zusammensetzung, umfasst:
von zu 15 bis 50 Gew.-% a) mindestens eine Polyepoxidverbindung;
von zu 0,01 bis 25 Gew.-% b) ein Härtungsmittel, bestehend aus einer oder mehreren Verbindungen, die mindestens zwei epoxidreaktive Gruppen aufweisen und die keine funktionelle Disulfidgruppe besitzen;
von zu 0,01 bis 10 Gew.-% c) das Heilmittel;
von zu 0,5 bis 15 Gew.-% d) den Elektrolyten; und
von zu 0 bis 55 Gew.-% e) ein Rheologiekontrollmittel,
wobei die Zusammensetzung **gekennzeichnet ist durch** ein Molverhältnis von epoxidreaktiven Gruppen zu Epoxidgruppen von 0,6 : 1 bis 1,1 : 1.

3. Zusammensetzung nach Anspruch 2, wobei die Zusammensetzung, basierend auf dem Gewicht der Zusammensetzung, umfasst:
von zu 20 bis 50 Gew.-%, vorzugsweise von zu 20 bis 40 Gew.-%, a) die mindestens eine Polyepoxidverbindung;
von zu 5 bis 25 Gew.-%, vorzugsweise von zu 5 bis 20 Gew.-%, das Härtungsmittel, bestehend aus einer oder mehreren Verbindungen, die mindestens zwei epoxidreaktive Gruppen aufweisen und die keine funktionelle Disulfidgruppe besitzen;
von zu 1 bis 10 Gew.-%, vorzugsweise von zu 2 bis 8 Gew.-%, c) das Heilmittel;
von zu 0,5 bis 10 Gew.-%, vorzugsweise von zu 0,5 bis 5 Gew.-%, d) den Elektrolyten; und
von zu 1 bis 55 Gew.-%, vorzugsweise von zu 15 bis 55 Gew.-%, e) das Rheologiekontrollmittel,
wobei die Zusammensetzung **gekennzeichnet ist durch** ein Molverhältnis von epoxidreaktiven Gruppen zu Epoxidgruppen von 0,75 : 1 bis 0,95 : 1.

4. Zusammensetzung nach einem der Ansprüche 1 bis 3, wobei die Epoxidverbindung aus der Gruppe ausgewählt ist, bestehend aus Bisphenol A-Epoxidharz, Bisphenol F-Epoxidharz und Gemischen davon.

5. Zusammensetzung nach einem der Ansprüche 1 bis 4, wobei b) das Härtungsmittel eine Thiol-funktionelle Verbindung umfasst oder daraus besteht, die aus der Gruppe ausgewählt ist, bestehend aus Pentaerythrittetramercaptoacetat (PETMP), Tris-(3-mercaptopropionat) (TMP), Trimethylolpropantrimercaptoacetat (TMPMP), Tris-(2-(mercaptopropionyloxy)ethyl)isocyanat, Glycoldimercaptoacetat und Gemischen davon.

6. Zusammensetzung nach einem der Ansprüche 1 bis 5, wobei das Heilmittel eine Verbindung umfasst, die aus der Gruppe ausgewählt ist, bestehend aus Bis(4-aminophenyl)disulfid; Bis(2-aminophenyl)disulfid; 2-Amino-4-chlorphenyldisulfid; und Gemischen davon.

7. Zusammensetzung nach einem der Ansprüche 1 bis 5, wobei das Heilmittel eine Verbindung umfasst, die aus der Gruppe ausgewählt ist, bestehend aus: 3,3'-Dithiopropionsäure; 4,4'-Dithiobuttersäure; Bis-(10-carboxydecyl)disulfid; 2,2'-Dithiobisethanamin (*Cystamin*); (2*R*)-2-Amino-3-[[(2*R*)-2-amino-2-carboxyethyl]disulfanyl]propansäure (*L-Cystin*); und Gemischen davon.

8. Zusammensetzung nach einem der Ansprüche 1 bis 5, wobei das Heilmittel ein flüssiges Polysulfidpolymer mit endständigem Mercaptan umfasst.

9. Zusammensetzung nach einem der Ansprüche 1 bis 8, wobei der Elektrolyt aus der Gruppe ausgewählt ist, bestehend aus: 1-Ethyl-3-methyl-1H-imidazol-3-um-methansulfonat; 1-Ethyl-3-methyl-1H-imidazol-3-um-methylsulfat; 1-Methylimidazoliumbis(trifluormethylsulfonyl)imid; 3-Methylimidazoliumbis(trifluormethylsulfonyl)imid; 1-Ethyl-3-methylimidazoliumbis(trifluormethylsulfonyl)imid; 1-Propyl-3-methylimidazoliumbis(trifluormethylsulfonyl)imid; 1-Butyl-3-methylimidazoliumbis(trifluormethylsulfonyl)imid; 1-Butyl-2,3-dimethylimidazoliumbis(trifluormethylsulfonyl)imid; 1-Hexyl-3-methylimidazoliumbis(trifluormethylsulfonyl)imid; 1-Octyl-3-methylimidazoliumbis(trifluormethylsulfonyl)imid; 1-Methyl-3-octylimidazoliumbis(trifluormethylsulfonyl)imid; 1-Decyl-3-methylimidazolium-bis(trifluormethylsulfonyl)imid; 1-Dodecyl-3-methylimidazolium-bis(trifluormethylsulfonyl)imid; Tetraethylphosphoniumbis(trifluormethylsulfonyl)imid; Tetrabutylphosphoniumbis(trifluormethylsulfonyl)imid; Tetraoctylphosphoniumbis(trifluormethylsulfonyl)imid; Trihexyl(tetradecyl)phosphoniumbis(trifluormethylsulfonyl)imid; Tridecyl(tetradecyl)phosphoniumbis(trifluormethylsulfonyl)imid; Tributyl(methyl)phosphoniumdiethylphosphat; Tributyl(ethyl)phosphoniumdiethylphosphat; Tetraoctylphosphoniumdiethylphosphat; und Gemischen davon.

10. Zusammensetzung nach Anspruch 9, wobei der Elektrolyt aus der Gruppe ausgewählt ist, bestehend aus: 1-Ethyl-3-methyl-1H-imidazol-3-um-methansulfonat; 1-Ethyl-3-methyl-1H-imidazol-3-um-methylsulfat; Trihexyl(tetradecyl)phosphoniumbis(trifluormethylsulfonyl)imid; Tributyl(methyl)phosphoniumdiethylphosphat; Tributyl(ethyl)phosphoniumdiethylphosphat; und Gemischen davon.

11. Zusammensetzung nach einem der Ansprüche 2 bis 10, wobei das Rheologiekontrollmittel einen elektrisch nicht leitfähigen Füllstoff umfasst, der aus Gruppe ausgewählt ist, bestehend aus: Calciumcarbonat; Calciumoxid; Calciummetasilicat; pyrogener Kieselsäure; Kieselsäure; Talkum; Bariumsulfat; und Gemischen davon.

12. Gebundene Struktur, umfassend
ein erstes Substrat, das eine elektrisch leitfähige Oberfläche aufweist; und
ein zweites Substrat, das eine elektrisch leitfähige Oberfläche aufweist;
wobei die gehärtete Klebstoffzusammensetzung nach einem der Ansprüche 1 bis 11 zwischen dem ersten und dem zweiten Substrat angeordnet ist.

13. Verfahren zum Lösen der gebundenen Struktur nach Anspruch 12, das Verfahren umfassend die Schritte:
i) Anlegen einer Spannung an beiden Oberflächen, um eine anodische Schnittstelle und eine kathodische Schnittstelle auszubilden; und
ii) Lösen der Oberflächen.

14. Verfahren nach Anspruch 13, wobei die Spannung, die in Schritt i) angelegt wird, von 0,5 bis 100 V beträgt und vorzugsweise für eine Dauer von 1 Sekunde bis 60 Minuten angelegt wird.

15. Verfahren zum Behandeln der gebundenen Struktur nach Anspruch 12, das Verfahren umfassend die Schritte:
i) Anlegen einer Spannung an beiden Oberflächen, um eine anodische Schnittstelle und eine kathodische Schnittstelle auszubilden; und
ii) Lösen der Oberflächen, um ein erstes Substrat bereitzustellen, das die gehärtete Klebstoffzusammensetzung auf der elektrisch leitfähigen Oberfläche davon angeordnet aufweist;
iii) derartiges Inontaktbringen des ersten Substrats mit einem dritten Substrat, dass die gehärtete Klebstoffzusammensetzung zwischen dem ersten und dem dritten Substrat angeordnet ist; und
iv) Wärmebehandeln der restlichen gehärteten Klebstoffzusammensetzung, um das erste und das dritte Substrat miteinander zu binden.

## Revendications

1. Composition adhésive durcissable et électrochimiquement décollable, à composant (1K), comprenant :
a) au moins un composé époxyde ;
b) un agent de durcissement constitué d'un ou plusieurs composés qui ont au moins un groupe réactif époxyde et qui ne possèdent pas de groupe fonctionnel disulfure ;
c) un agent de cicatrisation constitué d'un ou plusieurs composés qui contiennent au moins un groupe fonctionnel disulfure et facultativement au moins un groupe réactif époxyde choisi parmi : hydroxyle ; thiol ; amine ; ou carboxyle ; et,
d) un électrolyte,
dans laquelle la composition est **caractérisée par** un rapport molaire des groupes réactifs aux époxydes aux groupes époxyde allant de 0,6:1 à 1,2: 1.

2. Composition selon la revendication 1, dans laquelle ladite composition comprend, sur la base du poids de la composition :
de 15 à 50 % en poids de a) au moins composé polyépoxyde ;
de 0,01 à 25 % en poids de b) un agent de durcissement constitué d'un ou plusieurs composés qui ont au moins deux groupes réactifs époxyde et qui ne possèdent pas de groupe fonctionnel disulfure ;
de 0,01 à 10 % en poids de c) ledit agent de cicatrisation ;
de 0,5 à 15 % en poids de d) ledit électrolyte ; et,
de 0 à 55 % en poids de e) un agent de régulation de rhéologie,
dans laquelle la composition est **caractérisée par** un rapport molaire des groupes réactifs aux époxydes aux groupes époxyde allant de 0,6: 1 à 1,1: 1.

3. Composition selon la revendication 2, dans laquelle ladite composition comprend, sur la base du poids de la composition :
de 20 à 50 % en poids, de préférence de 20 à 40 % en poids, de a) ledit au moins un composé polyépoxyde ;
de 5 à 25 % en poids, de préférence de 5 à 20 % en poids, dudit agent de durcissement constitué d'un ou plusieurs composés qui ont au moins deux groupes réactifs époxyde et qui ne possèdent pas de groupe fonctionnel disulfure ;
de 1 à 10 % en poids, de préférence de 2 à 8 % en poids, de c) ledit agent de cicatrisation ;
de 0,5 et 10 % en poids, de préférence de 0,5 à 5 % en poids, de d) ledit électrolyte ; et,
de 1 et 55 % en poids, de préférence de 15 à 55 % en poids, de e) ledit agent de régulation de rhéologie,
dans laquelle la composition est **caractérisée par** un rapport molaire des groupes réactifs aux époxydes aux groupes époxyde allant de 0,75: 1 à 0,95: 1.

4. Composition selon l'une quelconque des revendications 1 à 3, dans laquelle ledit composé époxyde est choisi dans le groupe constitué de résine époxy de bisphénol A, résine époxy de bisphénol F et des mélanges de celles-ci.

5. Composition selon l'une quelconque des revendications 1 à 4, dans laquelle b) ledit agent de durcissement comprend ou consiste en un composé à fonctionnalité thiol choisi dans le groupe constitué de tétramercapto-acétate de pentaérythritol (PETMP), tris-(3-mercaptopropionate) (TMP), trimercaptoacétate de triméthylolpropane (TMPMP), tris(2-(mercaptopropionyloxy)éthyl)isocyanate, dimercaptoacétate de glycol et des mélanges de ceux-ci.

6. Composition selon l'une quelconque des revendications 1 à 5, dans laquelle ledit agent de cicatrisation comprend un composé choisi dans le groupe constitué de : bis(4-aminophényl)disulfure ; bis(2-aminophényl)disulfure ; 2-amino-4-chlorophényldisufure ; et des mélanges de ceux-ci.

7. Composition selon l'une quelconque des revendications 1 à 5, dans laquelle ledit agent de cicatrisation comprend un composé choisi dans le groupe constitué de : acide 3,3'-dithiopropionique ; acide 4,4'-dithiobutyrique ; bis-(10-carboxydécyl)disulfure ; 2,2'-dithiobiséthanamine (*cystamine*) ; acide (2*R*)-2-amino-3-[(2*R*)-2-amino-2-carboxyéthyl]disulfanyl]propanoïque (*L*-*cystine*) ; et des mélanges de ceux-ci.

8. Composition selon l'une quelconque des revendications 1 à 5, dans laquelle ledit agent de cicatrisation comprend un polymère de polysulfure liquide à terminaison mercaptan.

9. Composition selon l'une quelconque des revendications 1 à 8, dans laquelle ledit électrolyte est choisi dans le groupe constitué de : méthanesulfonate de 1-éthyl-3-méthyl-1H-imidazol-3-um ; méthylsulfate de 1-éthyl-3-méthyl-1H-imidazol-3-um ; 1-méthylimidazolium bis(trifluorométhylsulfonyl)imide ; 3-méthylimidazolium bis(trifluorométhylsulfonyl)imide ; 1-éthyl-3-méthylimidazolium bis(trifluorométhylsulfonyl)imide ; 1-propyl-3-méthylimidazolium bis(trifluorométhylsulfonyl)imide ; 1-butyl-3-méthylimidazolium bis(trifluorométhylsulfonyl)imide ; 1-butyl-2,3-diméthylimidazolium bis(trifluorométhylsulfonyl)imide ; 1-hexyl-3-méthylimidazolium bis(trifluorométhylsulfonyl)imide ; 1-octyl-3-méthylimidazolium bis(trifluorométhylsulfonyl)imide ; 1-méthyl-3-octylimidazolium bis(trifluorométhylsulfonyl)imide ; 1-décyl-3-méthylimidazolium bis(trifluorométhylsulfonyl)imide ; 1-dodécyl-3-méthylimidazolium bis(trifluorométhylsulfonyl)imide ; tétraéthylphosphonium bis(trifluorométhylsulfonyl)imide ; tétrabutylphosphonium bis(trifluorométhylsulfonyl)imide ; tétraoctylphosphonium bis(trifluorométhylsulfonyl)imide ; trihexyl(tétradécyl)phosphonium bis(trifluorométhylsulfonyl)imide ; tridécyl(tétradécyl)phosphonium bis(trifluorométhylsulfonyl)imide ; diéthylphosphate de tributyl(méthyl)phosphonium ; diéthylphosphate de tributyl(éthyl)phosphonium ; diéthylphosphate de tétraoctylphosphonium ; et des mélanges de ceux-ci.

10. Composition selon la revendication 9, dans laquelle ledit électrolyte est choisi dans le groupe constitué de : méthanesulfonate de 1-éthyl-3-méthyl-1H-imidazol-3-um ; méthylsulfate de 1-éthyl-3-méthyl-1H-imidazol-3-um ; trihexyl(tétradécyl)phosphonium bis(trifluorométhylsulfonyl)imide ; diéthylphosphate de tributyl(méthyl)phosphonium ; diéthylphosphate de tributyl(éthyl)phosphonium ; et des mélanges de ceux-ci.

11. Composition selon l'une quelconque des revendications 2 à 10, dans laquelle ledit agent de régulation de rhéologie comprend une charge électriquement non conductrice choisie dans le groupe constitué de : carbonate de calcium ; oxyde de calcium ; métasilicate de calcium ; silice pyrogénée ; silice ; talc ; sulfate de baryum ; et des mélanges de ceux-ci.

12. Structure collée comprenant
un premier substrat ayant une surface électriquement conductrice ; et,
un deuxième substrat ayant une surface électriquement conductrice ;
dans laquelle la composition adhésive durcie selon l'une quelconque des revendications 1 à 11 est disposée entre les premier et deuxième substrats.

13. Procédé de décollement de la structure collée selon la revendication 12, le procédé comprenant les étapes consistant à :
i) appliquer une tension aux bornes des deux surfaces pour former une interface anodique et une interface cathodique ; et
ii) décoller les surfaces.

14. Procédé selon la revendication 13, dans lequel la tension appliquée à l'étape i) va de 0,5 à 100 V et elle est de préférence appliquée pendant une durée allant de 1 seconde à 60 minutes.

15. Procédé de traitement de la structure collée selon la revendication 12, le procédé comprenant les étapes consistant à :
i) appliquer une tension aux bornes des deux surfaces pour former une interface anodique et une interface cathodique ; et
ii) décoller les surfaces afin d'obtenir un premier substrat ayant ladite composition adhésive durcie disposée sur la surface électriquement conductrice de celui-ci ;
iii) mettre en contact ledit premier substrat avec un troisième substrat de telle sorte que la composition adhésive durcie est interposée entre les premier et troisième substrats ; et,
iv) traiter thermiquement la composition adhésive durcie résiduelle pour lier ensemble lesdits premier et troisième substrats.
